# EUROPEAN PATENT SPECIFICATION

(11) **EP 2 554 617 B1**
(45) Date of publication and mention of the grant of the patent: **17.12.2014**
(21) Application number: 12178791.5
(22) Date of filing: 01.08.2012
(51) Int. Cl.: C09J 183/04, B60C 19/00, C09J 175/04, C08G 18/48, C08G 18/42

(54) **Tire with foamed noise damper**
Reifen Schaumgeräuschdämpfer
Pneu doté d'un amortisseur de bruit en mousse

(30) Priority: 02.08.2011 US 201113196511
(43) Date of publication of application: 06.02.2013
(73) Proprietor: The Goodyear Tire & Rubber Company, Akron, OH 44316-0001 (US)
(72) Inventor: Bormann, René Louis, L-7462 Moesdorf (LU); Dong-Rong Pan, Eddy, Stow, OH Ohio 44224 (US); Middelberg, Jason Mark, 4112 Napier (NZ); Sundkvist, Karl Eric, Akron, OH Ohio 44313 (US); Meng, Xianwei, Copley, OH Ohio 44321 (US); Sandstrom, Paul Harry, Cuyahoga Falls, OH Ohio 44223 (US); Benko, David Andrew, Munroe Falls, OH Ohio 44262 (US); Hahn, Bruce Raymond, Hudson, OH Ohio 44210 (US); Dando, Rebecca Lee, Uniontown, OH Ohio 44685 (US)
(74) Representative: Kutsch, Bernd

(56) References cited:
- EP-A1- 2 397 314
- EP-A2- 1 777 081
- EP-A2- 1 800 911
- DE-A1- 19 806 935
- US-A1- 2010 038 005

## Description

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. Shortcomings in these previous efforts, as well as new stricter regulations regarding noise reduction, have provided a need for further improvements to the tire to reduce sound transmission due to vibrations within the air chamber.

Carcasses of pneumatic green tires are built as a series of layers of flexible high modulus cords encased in a low modulus rubber. An innerliner is positioned to form the innermost surface of the tire. The green tire is cured in a curing press using a curing bladder, which forces expansion of the tire. During curing, the innerliner expands with the carcass, which is forced against the indentations in the curing mold to form the tread of the tire, and all components are co-cured so as to provide a substantially cohesive bond between one and another.

The innerliner for a pneumatic tubeless tire is typically formed from a compound containing for example a halobutyl rubber due to its good barrier properties. Before the tire is cured, the entire inner surface of the innerliner and/or the outer surface of the curing bladder are coated with a release agent. The release agent is commonly referred to as a "lining cement" when used on the surface of the innerliner, and as a "bladder lube" or "bladder spray" when used on the curing bladder. The release agent facilitates removal of the curing bladder from the innerliner after curing so that the innerliner is not damaged.

Thus, prior to bonding a foam noise damper to the cured innerliner, in prior art methods the innerliner must be cleaned to remove contaminants present on the innerliner surface from the molding operation. In particular, the release agent must be removed from the innerliner surface. Solvents have typically been used for this cleaning operation. Solvents effective for removing the release agents contain hazardous air pollutants. These solvents are thus subject to environmental regulations, which have become more stringent in the recent past. It would thus be desirable to eliminate the need for solvent cleaning of the innerliner surface in order to comply with strict environmental regulations. In addition, solvent cleaning is labor intensive and costly due to its hazardous nature, such that significant cost savings may be realized by elimination of the solvent cleaning process. Alternatively, preparation of the innerliner for application of a foam noise damper may involve buffing the innerliner to provide a surface suitable for adhesion, see for example US-B- 7,669,628. EP-A-1 777.081 describes a method and a tire in accordance with the preamble of claim 1 and claim 8 respectively.

### Summary of the Invention

The invention is directed to a method in accordance with claim 1 and to a tire, preferably a pneumatic tire, in accordance with claim 8.

Dependent claims refer to preferred embodiments of the invention.

In one preferred aspect, the present invention is directed to a method for making a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a innerliner surface facing an interior cavity of the tire; the method comprising the steps of:
applying a silicone adhesive to the innerliner surface to form an adhesive prepared surface;
applying a solid foam noise reducer to the adhesive prepared surface; and
curing the adhesive.

In another aspect of the invention, the invention is directed to a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a innerliner surface facing an interior cavity of the tire; the tire further comprising:
a release agent disposed on the innerliner surface;
a silicone adhesive layer disposed on the release agent; and
a solid foam noise damper disposed on the silicone adhesive layer.

### Brief Description of the Drawings

The invention will be more readily understood with respect to the accompanying drawing wherein:
The sole drawing is a cross-sectional view of one embodiment of a tire having foam noise damper attached via an abraded integral foamed structure according to the present invention.

### Description of the Invention

There is disclosed a method for making a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a innerliner surface facing an interior cavity of the tire; the method comprising the steps of:
applying a liquid adhesive to the innerliner surface to form an adhesive prepared surface;
applying a solid foam noise reducer to the adhesive prepared surface; and
curing the adhesive.

There is further disclosed a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; an innerliner disposed radially inward of the carcass, the innerliner having a innerliner surface facing an interior cavity of the tire; the tire further comprising:
a release agent disposed on the innerliner surface;
a silicone adhesive layer disposed on the release agent; and
a solid foam noise damper disposed on the silicone adhesive layer.

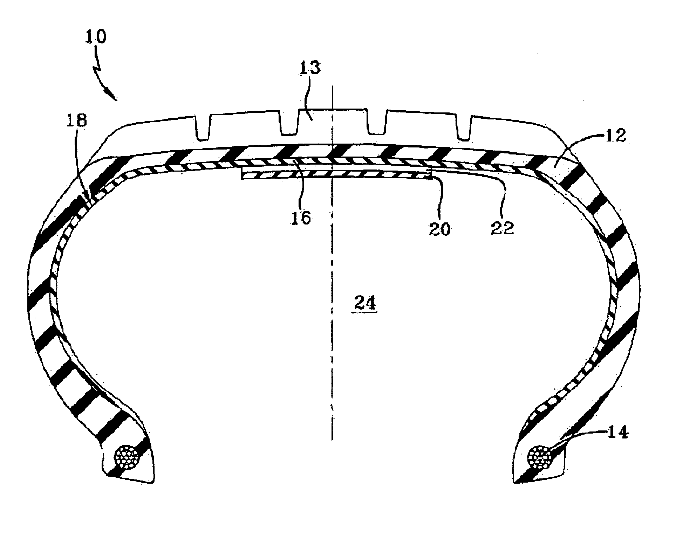

The drawing depicts in cross-section a tire assembly 10 in accordance with the present invention. Tire assembly 10 includes a carcass 12 having a tread 13 disposed on the outermost surface, where tread 13 is the portion of the tire assembly 10 that contacts the ground during operation of the tire. As is known in the art, the carcass 12 may include one or more plies of cords (not shown) that wrap the bead portions 14 of the tire 10. An innerliner 16 is disposed radially inward of the carcass 12 so as to face the air chamber 24. In accordance with the present invention, foam noise damper 20 is adhered to innerliner 16 with adhesive 22 to surface 18 of innerliner 16. As shown in FIG. 1, adhesive 22 is disposed between foam noise damper 20 and surface 18 of innerliner 16. In another embodiment, a release agent (not shown) is disposed on surface 18 of innerliner 16, and adhesive 22 is disposed between the release agent and foam noise damper 20. Suitable release agents include release agent selected from the group consisting of silicone release agents and polytetrafluoroethylene release agents.

In one embodiment the foam noise damper may extend circumferentially about the inside of the tire and axially from bead to bead. In another embodiment, the foam noise damper may extend circumferentially about the inside of the tire and only partially across the width of the tire. In one embodiment, the foam noise damper may extend axially no more than 50 percent of the tread width. In another embodiment, the foam noise damper may extend axially in a range of from about 10 percent to 50 percent of the tread width. In another embodiment, the foam noise damper may be substantially centered axially on the axial centerline of the tire. In another embodiment, multiple circumferential foam noise dampers may be used, disposed so as to equalize the load on the tire and maintain dynamic balance.

The foam noise damper 20 is disposed on radially inward of the tread 13, as shown in the drawing. Accordingly, to deform easily during running and not to affect the running performance such as steering stability, the material of the damper is preferably a light-weight low-density flexible material, e.g., foamed rubber, foamed synthetic resins, cellular plastics and the like. In the case of foamed materials (or sponge materials), an open-cell type and a closed-cell type can be used, but an open-cell type is preferred. For example, synthetic resin foams such as ether based polyurethane foam, ester based polyurethane foam, polyethylene foam and the like; rubber foams such as chloroprene rubber foam, ethylene-propylene rubber foam, nitrile rubber foam, silicone rubber foam and the like can be used. Especially, polyethylene foam, polyurethane foams including ether based polyurethane foam and the like are preferably used in view of noise damping effect, lightness in weight, easy control of expansion rate and durability.

The foam noise damper is typically an open-cell foam material consists of polyurethane (PU) foam which can either be of a polyester or polyethene type. In one embodiment, the foam noise damper has a density in a range from 0.010 to 0.040 gram / cm³

In one embodiment, the cross section profile of the foam noise damper is rectangular. In one embodiment, the cross section profile of the foam noise damper represents 1 or 2 periods of a sine-type waveform on the side directed radially towards the tire air cavity and flat on the opposite side contacting the adhesive. In one embodiment, the surface of the foam noise damper includes pyramids or cones directed radially towards the tire air cavity.

In one embodiment, the width of the foam noise damper is in a range of from 100 to 130 mm. In one embodiment, the width does not exceed a width calculated as: foam width = belt width - 70 mm.

In one embodiment, the thickness, or gauge, of the foam noise damper is in a range of from 15 - 30 mm, the gauge being a function of 1) tire cavity resonance damping, 2) maximum allowable weight of the damper when considering effects on tire performance, and 3) density of material.

The damper may include a splice while the surface to which it is attached will not be visible so that the splice appears closed. A possible configuration is to close the splice prior to the installation of the damper by forming a ring and gluing the endings together.

Depending on the environment where the tire is used, there is a possibility that the air which fills the tire cavity to inflate the tire is humid and the water makes condensation in the closed cavity. Accordingly, foam materials which are hard to be hydrolyzed such as ether based polyurethane are suitably used.

Further, in order to prevent water from penetrating into the noise damper, a water repellent treatment can be preferably made on the foam material. Also, a mildew proof treatment can be preferably made.

Furthermore, in order to avoid poison in the emission gas generated when incinerating scrap tires, it is preferred that raw materials not including halogen are used to make the foam material.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 180 to 300 Hz is desirable.

The foam noise damper is secured to the tire innerliner using an adhesive.

Useful adhesives according to the invention are silicone adhesives. Silicone adhesives are known to a person skilled in the art, for example, from EP-A- 0 118 030, EP-A- 0 316 591, EP-A- 0 327 847, and EP-A- 0 553 143, DE-A- 195 49 425, and US-A- 4,417,042.

In one embodiment, the adhesive is a silicone-based composition, in particular, chosen from acetate, alkoxy, oxime, benzamide and amine silicones. In one embodiment, the adhesive comprises polyorganosiloxanes and organosilicone compounds with acetate, alkoxy, oxime, benzamide and amine hydrolysable groups. Such adhesive compositions are described in US-A- 5,378,406 in the quantities stated therein.

In one embodiment, the adhesive is a room temperature crosslinking system such as described in EP-A- 0 327 847 or US-A- 5,077,360. These may be single component or multicomponent systems, in which in the multicomponent systems the catalyst and crosslinking agent may be present separately (for example, disclosed in US-A- 4,891,400 and US-A-5,502,144), or other "RTV two-component" silicone systems, in particular platinum-free systems.

"Single component" systems that contain all ingredients needed to form an adhesive composition, are stored with exclusion of atmospheric humidity and/or atmospheric oxygen and, reacting with atmospheric humidity, and cure at the site of use, are particularly preferred. "Neutral" silicone systems may also be used, wherein the reaction of crosslinking agents with water in the ambient air does not give rise to corrosive, acidic, basic or strongly smelling cleavage products. Examples of such systems are disclosed in DE-A- 195 49 425, US-A- 4,417,042 or EP-A- 0 327 847.

Stability of adhesive compositions is typically achieved by adding finely divided solids, also known as fillers, which may be subdivided into those of the organic and inorganic kinds. Inorganic fillers include silica/silicon dioxide (coated or uncoated), chalk (coated or uncoated) and/or zeolites. The latter may additionally also act as desiccants. PVC powder may, for example, be considered as an organic filler. Fillers here generally substantially contribute to the sealing composition having a necessary internal cohesion after application. The stated additives or fillers may be divided into pigments and thixotroping fillers, which are also known as thixotroping agents.

Suitable thixotroping agents include known thixotroping agents such as bentones or kaolins, or also organic compounds such as hydrogenated castor oil or derivatives thereof with polyfunctional amines or the reaction products of stearic acid or ricinoleic acid with ethylenediamine. Co-use of silica, in particular, pyrogenic silica, has proved particularly favorable. Substantially swellable polymer powders may also be considered as thixotroping agents. Examples include polyacrylonitrile, polyurethane, polyvinyl chloride, polyacrylic acid esters, polyvinyl alcohols, polyvinyl acetates and their corresponding copolymers. Particularly good results may be achieved with finely divided polyvinyl chloride powders. Apart from the thixotroping agents, coupling agents such as mercaptoalkylsilane may also be used. It has been found convenient to use a monomercaptoalkyltrialkoxysilane.
Mercaptopropyltrimethoxysilane is, for example, commercially conventional.

Properties of an adhesive composition may be further improved if other components are also added to the plastics powder used as thixotroping agent. These include substances categorized as plasticizers or swelling agents and swelling auxiliaries used in plastics.

Plasticizers highly suitable for silicone sealant compositions include silicone oils, preferably polydimethylsiloxanes, and hydrocarbons and/or mixtures thereof, in particular, hydrocarbons or mixtures thereof with a boiling point greater than 200º C., in particular, greater than 230º C.

Pigments and dyes used include substances known for these intended applications, such as titanium dioxide, iron oxides and carbon black.

Storage stability can be improved by adding stabilizers such as benzoyl chloride, acetyl chloride, toluenesulfonic acid methyl ester, carbodiimides and/or polycarbodiimides to the sealing compositions. Olefins with 8 to 20 carbon atoms have proven to be particularly good stabilizers. In addition to their stabilizing action, these may also act as plasticizers or swelling agents. Preferred olefins are those with 8 to 18 carbon atoms, in particular, with the double bond arranged in 1,2-position. Particularly good results are obtained if the molecular structure of these stabilizers is linear.

Application of a silicone adhesive offering sufficiently good adhesion on a surface contaminated by demolding agents such as used in the tire vulcanizing process (bladder release lubricants or agents). Adhesion is considered as sufficient when adhesion to the innerliner is high enough to prevent foam from detaching during tire life time; although there is no upper limit, it is not required that the adhesion exceeds the tear resistance of the foam to adhesive interface or the foam itself. Additionally the adhesive should remain elastic during tire life time and be resistant to fatigue under flexing and shearing. Adhesives which fulfill these requirements are of the Loctite® 5900 series including 5900, 5910 and 5970 from Henkel.

Cleaning of the tire innerliner surface before application of the silicone adhesive is optional. The surface may be cleaned using a hot water high pressure (HWHP) water jet at about 65 °C and up to 90 bar. Mechanical cleaning (grinding, buffing) is not needed.

As the foam noise damper is applied to cured tires, the innerliner surface may or may not feature a smooth portion. The smooth portion, if present, results from the fact that tire curing bladders are typically ground at their center to remove imperfections and flash resulting from the bladder production process. For tires to be equipped with a foam noise damper, tire curing bladders having a smooth portion wider than about 50% of the damper width (i.e., less or equal to about 60 mm) may be used.

In one embodiment, the silicone adhesive may be applied to the innerliner surface either covering the complete attachment surface at a uniform thickness. In one embodiment, the silicon adhesive may be applied in circumferential stripes, for example using 3 stripes in a shoulder-centerline-shoulder configuration. In one embodiment, the silicone adhesive may be applied as a wavy line with a period length of up to 10 cm varying from shoulder to shoulder. Applied beads of the silicone adhesive may be spread out using rollers or spatulas to ensure the adhesive mixes with the contaminations on the innerliner surface and acts as a solvent to them.

The foamed noise damper can be disposed in various inner portions of the tire. For example it can extend from bead to bead for coverage of the innerliner spanning both the tread and sidewall portions of the tire or it can simply be selectively and locally disposed on the innerliner surface of the tire. In one embodiment, the foamed noise damper is disposed on the innerliner surface circumferentially and bisected by the equatorial plane of the tire.

The foamed noise damper of the tire is of such a gauge as to not occupy any substantial inner portion of the inflated tire. Generally, its thickness ranges from 1 to 80 and preferably 10 to 50 percent of the total tire thickness, depending somewhat upon the tire size and intended use of the tire with its structured volume being less than 25 percent, preferably less than 10 percent, of the encompassed volume of air in the pneumatic tire. Thus, a typical thickness is in the range of 10 to 30 percent of the total tire thickness for an ordinary passenger pneumatic tire with its volume being less than 10 percent of the encompassed volume of air in the pneumatic tire.

In order to obtain an adequate noise dampening effect by the foamed noise damper in the tire, the foamed noise damper has a density or density and porosity in ranges suitable to dampen noise.

While certain representative embodiments and details have been shown for the purpose of illustrating the invention, it will be apparent to those skilled in this art that various changes and modifications may be made therein without departing from the spirit or scope of the invention.

### Example

Experimental work involved researching and acquiring different classes of adhesives, developing a repeatable test method to compare adhesives, determining the best way to apply and cure each adhesive, compounding and mixing in-house formulations, and testing adhesive compatibility. Much of this work was complicated and time consuming. For example, static mixing equipment had to be purchased to mix the two-part systems, and the UV-curable adhesives had to be cured at an outside vendor.

### Sample Preparation

Rubber strips were prepared for the laboratory test method. The rubber used for adhesive evaluations was a standard bromobutyl innerliner compound. The uncured rubber was milled to form a sheet. Fabric backing was then applied to one side of the sheet and the rubber/fabric was cut into 6 inch squares. It was then cured in a press for 30 minutes at 160 °C against a curing bladder under pressure. A protective layer of mylar was placed between the rubber and the bladder during the cure to ensure a clean rubber surface. Various release agents were sprayed onto the curing bladder and film was not used when simulating an actual tire innerliner. After curing, the rubber squares were cut into strips 1.27 cm wide by 15.24 cm long. The strips had a patio texture similar to a curing bladder.

In order to make an adhesive sample, a thin layer of adhesive was applied as evenly as possible to the textured side of one rubber strip (with the film removed). A second rubber strip was placed on top of the adhesive, sandwiching the adhesive between the two strips of rubber. The strips were then squeezed together by hand to create an adhesive layer approximately 1.65 mm thick. Excess adhesive was wiped off the sides of the sample with a paper towel. Approximately 5.08 cm of the end of the sample was left adhesive-free in order to provide a grip for the Instron. The sample was then given time to cure. The adhesive was considered cured when there were no wet spots when the sample was pulled apart. To ensure the sample was properly cured, most adhesives were allowed to dry under ambient conditions for two weeks.

Table 1 lists the different classes of adhesives evaluated. Most adhesives were 1-part systems that came in a tube and had the consistency of thick glue. The adhesive was applied to the rubber strip with a caulking gun. When two-part systems were used, each part was dispensed in the ratio recommended by the manufacturer using a caulking gun designed to hold both tubes. A static mixer was placed on the end of the caulking gun to achieve proper mixing.

**Table 1 - Adhesive Classes**

| Adhesive | System | Manufacturer / Supplier |
|---|---|---|
| Silicone | 1 part, 2 part, UV cure | Loctite, Dow Corning, GE |
| Cyanoacrylate | 1 part | AdChem, Loctite |
| Polyurethane | 1 part, 2 part | Sika, Aptek |
| Polyamide | Hot melt | Loctite |
| Acrylic | 2 part, UV cure | Loctite, Lord |
| Epoxy | 1 part, 2 part | Araldite, Cotronics |
| Methacrylate | 2 part | Araldite |

### Laboratory Test Method

A peel test was designed to measure the strength of the adhesive bond for both original and layered samples. The cured sample, which consisted of two rubber strips glued together by the adhesive, was peeled apart in an Instron at the rate of 50.8 cm/minute. An arbitrary gap width, sample thickness, and specimen area was set. The same settings were used for all samples. Samples were tested in triplicate. Testing was conducted at room temperature. Steady state average force (N) and failure mode was recorded. Acceptable adhesion was determined to be a steady-state value of over 70N with cohesive failure (tearing within the adhesive).

### Results and Discussion

Table 2 lists all of the adhesives evaluated with the laboratory peel test method. All samples were fully cured before being tested. As mentioned earlier, acceptable adhesion was defined as cohesive tearing with an average tear value of over 70N. Three adhesives stood out as having excellent adhesion to a clean rubber surface - Loctite 5900, Loctite U-05 FL, and AdChem cyanoacrylate. Although the cyanoacrylate had excellent adhesion to rubber, it cracked when flexed, so it was not considered for further evaluation. The U-05 FL bonded so strongly to the rubber that some of the tearing went into the rubber during the peel test. Loctite 5900 gave consistently "knotty" tear indicating the desirable cohesive failure.

**Table 2 - Adhesion to Rubber Compound**

| Supplier | Adhesive Type | Trade Name | force (N) | Tear Mode |
|---|---|---|---|---|
| GE | silicone | RTV 103 | 0 | adhesive |
| GE | silicone | RTV5240 | 0 | adhesive |
| GE | silicone | RTV 160 | 0 | adhesive |
| GE | silicone | RTV 162 | 7.5 | adhesive |
| GE | silicone | RTV 615(2P) | 0 | adhesive |
| GE | silicone | RTV 167 | 18.8 | adhesive |
| GE | silicone | silicone II | 26.7 | cohesive |
| Loctite | silicone | 5900 | >100 | cohesive |
| Loctite | silicone | 5905 | 54.9 | cohesive |
| Loctite | silicone | 5910 | 78.2 | cohesive |
| Loctite | silicone | 5970 | 48.3 | cohesive |
| Loctite | urethane | U-10FL | 6 | adhesive |
| Loctite | urethane | U-05FL | >100 | cohesive |
| Loctite | epoxy | E-90FL | 29.6 | adhesive |
| Loctite | silicone | Blue RTV | 0 | adhesive |
| Loctite | silicone | 59530 | 0 | adhesive |
| Loctite | UV-acrylic | 3106 | 0 | adhesive |
| Loctite | hot melt | Hysol 7804 | 0 | adhesive |
| Loctite | polyamide | Hysol 7811 | 8 | adhesive |
| Loctite | UV-silicone | 5960 | 0 | adhesive |
| Loctite | UV-silicone | 5950 | 0 | adhesive |
| Dow Corning | silicone | 1437 | 18 | cohesive |
| Dow Corning | silicone | 3-0117 | 37.6 | cohesive |
| Dow Corning | silicone | 1537 | 12.4 | cohesive |
| Dow Corning | silicone | 737 | 10.4 | cohesive |
| Dow Corning | silicone | 1437 | 12.9 | cohesive |
| Lord | acrylic | 202 | 8 | adhesive |
| Lord | acrylic | 403 | 0 | adhesive |
| Aptek Labs | urethane | 2201-A/B | 91 | cohesive |
| Aptek Labs | urethane | 2205-A/B | 57 | cohesive |
| Cotronics | epoxy | 4538N | 0 | adhesive |
| Adchem | cyanoacrylate | Super Glue | >100 | cohesive |
| Sika | polyurethane | Sikaflex 552 | 73.2 | cohesive |
| Sika | polyurethane | 521-UV | 34.9 | cohesive |
| Sika | polyurethane | 721-UV | 14.8 | adhesive |
| Sika | polyurethane | Sikaflex 252 | 51.1 | cohesive |
| Sika | polyurethane | Sikaflex 227 | 34.1 | mixed |
| Araldite | rubber epoxy | 2015 | 17.7 | adhesive |
| Araldite | rubber methacrylate | 2021 | 87.8 | cohesive |
| Araldite | epoxy | 2010 | 0 | adhesive |

| | | | | |
|---|---|---|---|---|
| adhesive= tear between adhesive and rubber surface cohesive= tear within adhesive | | | | |

Although Loctite U-05 FL urethane adhesive appeared to have a stronger bond to rubber than Loctite 5900, adhesion was lost in the presence of a release agent, as shown in Table 3.

Several adhesives that looked promising when bonded to clean rubber lost all adhesion against a typical innerliner containing the release agent. Attempts to clean the release agent off of the rubber surface did not improve adhesion, which suggests that trace amounts of release agent negate the effectiveness of most adhesives. The only adhesives that bonded to the rubber in the presence of trace amounts of the release agent (after cleaning) were Loctite silicone-based adhesives 5900 and 5910. Of these two, a stronger bond was obtained with 5900.

**Table 3 - Adhesion Results to Rubber Compound Exposed to Release Agent**

| Supplier | Adhesive Type | Trade Name | force (N) | Tear Mode |
|---|---|---|---|---|
| Loctite | silicone | 5900 | 94 | cohesive |
| Loctite | silicone | 5910 | 65.6 | cohesive |
| Loctite | urethane | U-05FL | 0 | adhesive |
| Aptek | urethane | 2201-A/B | 0 | adhesive |
| Aptek | urethane | 2205-A/B | 0 | adhesive |
| Sika | polyurethane | Sikaflex 552 | 8.3 | adhesive |
| Sika | polyurethane | Sikaflex 252 | 0 | adhesive |
| Araldite | rubber methacrylate | 2021 2-part | 0 | adhesive |

## Claims

1. A method for making a tire comprising a foam noise damper (20), the tire (10) comprising an innerliner (18) having an innerliner surface facing an interior cavity (24) of the tire (10), the method comprising the steps of:applying a silicone adhesive (22) to the innerliner surface to form an adhesive prepared surface; applying a solid foam noise damper (20) to the adhesive prepared surface; and curing the adhesive **characterized in that** the innerliner surface comprises a release agent selected from the group consisting of silicone release agents and polytetrafluoroethylene release agents.

2. The method of claim 1, wherein the adhesive is a silicone adhesive comprising one or more polyorganosiloxanes and one or more organosilicones.

3. The method of at least one of the previous claims, wherein the foam noise damper (20) is made of or comprises a polyurethane foam and/or has a density in a range of from 0.01 to 0.04 g/cm³.

4. The method of at least one of the previous claims, wherein the tire (10) is a pneumatic tire comprising a tread portion (13) defining a tread width and a carcass (12), and wherein the innerliner (18) is disposed radially inward of the carcass (12) or is a radial inner part of the carcass (12).

5. The method of claim 1, wherein the silicone adhesive (22) is applied in circumferential stripes.

6. The method of claim 5 wherein the silicone adhesive (22) is applied in three circumferential stripes in a shoulder-centerline-shoulder configuration.

7. The method of claim 1 wherein the silicone adhesive (22) is applied as a wavy line with a period length of up to 10 cm varying from shoulder to shoulder.

8. A tire comprising an innerliner (18) having an innerliner surface facing an interior cavity (24) of the tire (10), a silicone adhesive layer (22) and a foam noise damper (20), wherein the foam noise damper (20) is disposed on the silicone adhesive layer (22), **characterized in that** a release agent selected from the group consisting of silicone release agents and polytetrafluoroethylene release agents is disposed on the innerliner surface facing an interior cavity (24) of the tire (10) and the silicone adhesive layer (22) is disposed on the release agent.

9. The tire of claim 8, wherein the silicone adhesive layer (22) comprises one or more polyorganosiloxanes and one or more organosilicones.

10. The tire of claim 9, wherein the organosilicone comprises a hydrolysable group selected from acetate, alkoxy, oxime, benzamide and amine hydrolysable groups.

11. The tire of at least one of the claims 8 to 10, wherein the foam noise damper (20) is made of or comprises one or more polyurethane foams and/or wherein the foam noise damper has a density in a range of from 0.01 to 0.04 g/cm³.

12. The tire of at least one of the claims 8 to 11, wherein the tire is a pneumatic tire comprising a ground contacting tread portion (13) and a carcass (12), wherein the innerliner (18) is disposed radially inward of the carcass (12) or is a radial inner part of the carcass (12).

13. The tire of claim 8, wherein the silicone adhesive (22) is disposed as in circumferential stripes.

14. The tire of claim 13 wherein the silicone adhesive (22) is disposed as three circumferential stripes in a shoulder-centerline-shoulder configuration.

15. The tire of claim 8 wherein the silicone adhesive (22) is disposed as a wavy line with a period length of up to 10 cm varying from shoulder to shoulder.

## Patentansprüche

1. Verfahren zur Herstellung eines Reifens, der einen Schaumstoff-Geräuschdämpfer (20) umfasst, wobei der Reifen (10) eine Innenisolierung (18) umfasst, die eine Innenisolierungsoberfläche aufweist, welche einem Innenhohlraum (24) des Reifens (10) zugewandt ist, wobei das Verfahren die Schritte umfasst des: Anbringens eines Silikonklebstoffs (22) an der Innenisolierungsoberfläche zur Bildung einer mit Klebstoff vorbereiteten Oberfläche; Anbringens eines Festschaumstoff-Geräuschdämpfers (20) an der klebstoffvorbereiteten Oberfläche; und Aushärtens des Klebstoffs, **dadurch gekennzeichnet, dass** die Innenisolierungsoberfläche ein Trennmittel umfasst, ausgewählt aus der aus Silikontrennmitteln und Polytetrafluorethylen-Trennmitteln bestehenden Gruppe.

2. Verfahren nach Anspruch 1, wobei der Klebstoff ein Silikonklebstoff ist, umfassend ein oder mehrere Polyorganosiloxane und ein oder mehrere Organosilikone.

3. Verfahren nach mindestens einem der vorgenannten Ansprüche, wobei der Schaumstoff-Geräuschdämpfer (20) aus einem Polyurethanschaum hergestellt ist oder diesen umfasst und/oder eine Dichte im Bereich von 0,01 bis 0,04 g/cm³ aufweist.

4. Verfahren nach mindestens einem der vorgenannten Ansprüche, wobei der Reifen (10) ein Luftreifen ist, der einen Laufflächenteil (13), welcher eine Laufflächenbreite definiert, und eine Karkasse (12) umfasst, und wobei die Innenisolierung (18) radial einwärts von der Karkasse (12) angeordnet ist oder ein radial innerer Teil der Karkasse (12) ist.

5. Verfahren nach Anspruch 1, wobei der Silikonklebstoff (22) in umfangsgerichteten Streifen angebracht wird.

6. Verfahren nach Anspruch 5, wobei der Silikonklebstoff (22) in drei umfangsgerichteten Streifen in einer Schulter-Mittellinie-Schulter-Konfiguration angebracht wird.

7. Verfahren nach Anspruch 1, wobei der Silikonklebstoff (22) als eine Wellenlinie mit einer Periodenlänge von bis zu 10 cm, die von Schulter zu Schulter variiert, angebracht wird.

8. Reifen, umfassend eine Innenisolierung (18), die eine Innenisolierungsoberfläche aufweist, welche einem Innenhohlraum (24) des Reifens (10) zugewandt ist, eine Silikonklebstoffschicht (22) und einen Schaumstoff-Geräuschdämpfer (20), wobei der Schaumstoff-Geräuschdämpfer (20) auf der Silikonklebstoffschicht (22) angeordnet ist, **dadurch gekennzeichnet, dass** ein Trennmittel, ausgewählt aus der aus Silikontrennmitteln und Polytetrafluorethylen-Trennmitteln bestehenden Gruppe, auf der Innenisolierungsoberfläche angeordnet ist, einem Innenhohlraum (24) des Reifens (10) zugewandt, und die Silikonklebstoffschicht (22) auf dem Trennmittel angeordnet ist.

9. Reifen nach Anspruch 8, wobei die Silikonklebstoffschicht (22) ein oder mehrere Polyorganosiloxane und ein oder mehrere Organosilikone umfasst.

10. Reifen nach Anspruch 9, wobei das Organosilikon eine hydrolysierbare Gruppe umfasst, ausgewählt aus hydrolysierbaren Acetat-, Alkoxy-, Oxim-, Benzamid- und Amingruppen.

11. Reifen nach mindestens einem der Ansprüche 8 bis 10, wobei der Schaumstoff-Geräuschdämpfer (20) aus einem oder mehreren Polyurethanschäumen hergestellt ist oder diese(n) umfasst und/oder wobei der Schaumstoff-Geräuschdämpfer eine Dichte im Bereich von 0,01 bis 0,04 g/cm³ aufweist.

12. Reifen nach mindestens einem der Ansprüche 8 bis 11, wobei der Reifen ein Luftreifen ist, umfassend einen mit dem Boden in Kontakt kommenden Laufflächenteil (13) und eine Karkasse (12), wobei die Innenisolierung (18) radial einwärts von der Karkasse (12) angeordnet ist oder ein radial innerer Teil der Karkasse (12) ist.

13. Reifen nach Anspruch 8, wobei der Silikonklebstoff (22) als umfangsgerichtete Streifen angeordnet ist.

14. Reifen nach Anspruch 13, wobei der Silikonklebstoff (22) als drei umfangsgerichtete Streifen in einer Schulter-Mittellinie-Schulter-Konfiguration angeordnet ist.

15. Reifen nach Anspruch 8, wobei der Silikonklebstoff (22) als eine Wellenlinie mit einer Periodenlänge von bis zu 10 cm, die von Schulter zu Schulter variiert, angeordnet ist.

## Revendications

1. Procédé pour confectionner un bandage pneumatique comprenant un amortisseur des bruits en mousse (20), le bandage pneumatique (10) comprenant un calandrage intérieur (18) possédant une surface de calandrage intérieur tournée vers la cavité interne (24) du bandage pneumatique (10), le procédé comprenant les étapes consistant à : appliquer un adhésif à base de silicone (22) sur la surface du calandrage intérieur pour former une surface préparée contenant un adhésif ; appliquer un amortisseur du bruit en mousse rigide (20) sur la surface préparée contenant un adhésif ; et durcir l'adhésif, **caractérisé en ce que** la surface du calandrage intérieur comprend un agent de démoulage choisi parmi le groupe constitué par des agents de démoulage à base de silicone et des agents de démoulage à base de polytétrafluoréthylène.

2. Procédé selon la revendication 1, dans lequel l'adhésif est un adhésif de type silicone comprenant un ou plusieurs polydiorganosiloxanes et un ou plusieurs organosilicones.

3. Procédé selon au moins une des revendications précédentes, dans lequel l'amortisseur des bruits en mousse (20) est constitué d'une mousse de polyuréthane ou comprend ladite mousse et/ou possède une densité dans la plage de 0,01 à 0,04 g/cm³.

4. Procédé selon au moins une des revendications précédentes, dans lequel le bandage pneumatique (17) est un bandage pneumatique comprenant une portion (13) faisant office de bande de roulement définissant une largeur de bande de roulement et une carcasse (12), et dans lequel le calandrage intérieur (18) est disposé à l'intérieur en direction radiale de la carcasse (12) ou représente une partie interne radiale de la carcasse (12).

5. Procédé selon la revendication 1, dans lequel l'adhésif (22) de type silicone est appliqué sous la forme de bandes circonférentielles.

6. Procédé selon la revendication 5, dans lequel l'adhésif (22) de type silicone est appliqué en trois bandes circonférentielles dans une configuration épaulement-ligne de centre-épaulement.

7. Procédé selon la revendication 1, dans lequel l'adhésif (22) de type silicone est appliqué sous la forme d'une ligne ondulée possédant une longueur de période s'élevant jusqu'à 10 cm qui varie d'un épaulement à l'autre.

8. Bandage pneumatique comprenant une surface de calandrage intérieur tournée vers la cavité interne (24) du bandage pneumatique (10), une couche adhésive à base de silicone (22) et un amortisseur des bruits en mousse (20), dans lequel l'amortisseur des bruits en mousse (20) est disposé sur la couche adhésive à base de silicone (22), **caractérisé en ce qu'**un agent de démoulage choisi parmi le groupe constitué par des agents de démoulage à base de silicone et des agents de démoulage à base de polytétrafluoréthylène est disposé sur la surface du calandrage intérieur tournée vers la cavité interne (24) du moule (10) et la couche adhésive à base de silicone (22) est disposée sur l'agent de démoulage.

9. Bandage pneumatique selon la revendication 8, dans lequel la couche adhésive à base de silicone (22) comprend un ou plusieurs polyorganosiloxanes et un ou plusieurs organosilicones.

10. Bandage pneumatique selon la revendication 9, dans lequel l'organosilicone comprend un groupe hydrolysable choisi parmi un groupe hydrolysable de type acétate, alcoxy, oxime, benzamide et amine.

11. Bandage pneumatique selon au moins une des revendications 8 à 10, dans lequel l'amortisseur des bruits en mousse (20) est constitué d'une mousse de polyuréthane ou comprend ladite mousse et/ou dans lequel possède une densité dans la plage de 0,01 à 0,04 g/cm³.

12. Bandage pneumatique selon au moins une des revendications 8 à 11, dans lequel le bandage est un bandage pneumatique comprenant une portion de bande de roulement (13) entrant en contact avec le sol et une carcasse (12), dans lequel le calandrage intérieur (18) est disposé à l'intérieur en direction radiale de la carcasse (12) ou représente une partie interne radiale de la carcasse (12).

13. Bandage pneumatique selon la revendication 8, dans lequel l'adhésif à base de silicone (22) est disposé sous la forme de bandes circonférentielles.

14. Bandage pneumatique selon la revendication 13, dans lequel l'adhésif à base de silicone (22) est disposé sous la forme de trois bandes circonférentielles dans une configuration épaulement-ligne de centre-épaulement.

15. Bandage pneumatique selon la revendication 8, dans lequel l'adhésif à base de silicone (22) est disposé sous la forme d'une ligne ondulée possédant une longueur de période s'élevant jusqu'à 10 cm qui varie d'un épaulement à l'autre.
